# EUROPEAN PATENT SPECIFICATION

(11) **EP 2 944 616 B1**
(45) Date of publication and mention of the grant of the patent: **08.05.2019**
(21) Application number: 15161928.5
(22) Date of filing: 31.03.2015
(51) Int. Cl.: C03B 9/347, B29C 49/48, B29C 49/56, C03B 9/353

(54) **MOULDING ASSEMBLY FOR THE MANUFACTURING OF HOLLOW CONTAINERS**
FORMEINRICHTUNG ZUR HERSTELLUNG VON HOLGLASWAREN
ENSEMBE DE MOULAGE POUR LA FABRIACATION D'OBJETS CREUX

(30) Priority: 13.05.2014 IT MI20140171 U
(43) Date of publication of application: 18.11.2015
(73) Proprietor: O.M.C.A. di Bassi Giovanni, 26010 Offanengo (CR) (IT)
(72) Inventor: Bassi, Giovanni, 26010 Offanengo CR (IT)
(74) Representative: Barbaro, Gaetano

(56) References cited:
- GB-A- 227 653
- US-A- 3 778 246
- US-A1- 2013 047 675

## Description

The present invention generally relates to equipment for the manufacturing of hollow containers such as glass bottles and in particular to a molding assembly comprising a mold with three radial sectors and a related mold-holder.

Blow molding is a manufacturing process used to manufacture hollow containers such as bottles or vials made of materials such as glass or plastic.

Blow molding is carried out by blowing compressed air inside a preform arranged in a mold inside which a cavity having the negative shape of the container to be manufactured is formed. By blowing compressed air into the preform this is expanded so as to contact the cavity walls, thus assuming the desired shape. The hollow container so obtained is then cooled inside the mold, which is then opened in order to allow to extract the finished product.

A mold for molding hollow containers such as glass bottles comprises a body having a generally cylindrical shape and made of cast iron, a bronze alloy or, more generally, of a material featuring high thermal conductivity. A cavity having the negative shape of a bottle to be manufactured is formed inside the cylindrical body.

GB 227653 A dating back to 1924 discloses a prior art finishing mold for glass bottles consisting of three parts. First and second side parts of the mold comprise a respective lug pivoted on a hinge pin carried by eye plates projecting from a third, rear part of the mold, and may therefore rotate relative thereto. The third, rear part of the mold reciprocates along a guide rod against the action of a spring fitted upon the rod, which is fixed to a mold bottom in turn mounted on a base plate.

According to GB227653 A, the mold is configured such that after partial rotation of its first and second side parts, buffer or projections formed thereon engage buffers or stops formed on the third, rear mold part, thus causing the whole mold to move back in a straight line along the guide rod until sufficiently clear of a bottle to allow the latter to be removed.

The cylindrical body of present molds for molding hollow containers is generally provided with a flange radially protruding from its shell that allows mounting of the body on a suitable mold-holder. The mold and the mold-holder form a molding assembly intended to be mounted on a molding machine. In order to allow extraction of a finished bottle, the cylindrical body of the mold is made up of two or three separable radial sectors every one of which comprises a portion of the flange.

The mold-holder comprises two or three arms hinged to each other and configured so as to allow mounting of the radial sectors of the mold at the respective flange portions.

Mold-holders having three arms configured for mounting molds comprising three radial sectors are more bulky and heavy than those comprising two arms, which makes their positioning and assembling on a molding machine more difficult.

Moreover, mold-holders with three arms are more complex and expensive than those having two arms.

It is therefore an object of the present invention to provide a molding assembly for the manufacturing of hollow containers which can overcome these drawbacks. Said object is achieved with a molding assembly whose main features are specified in the first claim, while other features are specified in the remaining claims.

An idea of solution underlying the invention is to modify a mold-holder having two arms so as to allow mounting, opening and closing of a mold having a body with three radial sectors. A first and a second radial sector of the mold are respectively mounted on the first and the second arms of the mold-holder and are rotatable therewith about its rotation axis, while a third radial sector of the mold is restrained to both the first and the second arms of the mold-holder through a kinematic chain configured so as to cause it to make a translation movement from and towards the axis of the mold-holder simultaneously with the rotation of the first and the second arms.

The main advantage offered by the invention is therefore to allow a remarkable simplification of the molding assemblies comprising molds made up of three radial sectors, which allows an easier positioning and assembling onto a molding machine.

According to a preferred embodiment of the invention, the kinematic chain comprises a pair of pins respectively fitted in a pair of slots. The pins are e.g. associated with the third radial sector of the mold, while the slots are e.g. associated to the arms of the mold-holder. Alternatively and in a completely equivalent manner, the pins may be associated to the arms of the mold-holder and the slots may be formed on the flanged portion of the third radial sector of the mold.

The slots are preferably formed on metal plates fixed in a removable manner on the arms of the mold-holder or on the flanged portion of the third radial sector of the mold, and the pins are removably restrained to the flanged portion of the third radial sector of the mold or to the arms of the mold-holder. This configuration is advantageous in that it allows to replace pins and slots when they are worn, damaged or broken.

A further advantage offered by this configuration of pins and slots is that their removal allows to use the two arms mold-holder with prior art molds having two sectors.

The mold-holder may also advantageously comprise a second kinematic chain configured to cooperate with the first kinematic chain so as to ensure that the movements of the third radial sector of the mold are exclusively translation movements and occur in a same radial direction. Asynchronous rotations of the arms of the mold-holder in fact would cause rotations of the third radial sector of the mold, resulting in the need to rotate the third radial sector into the correct position by contact with the first and second radial sectors when closing the mold. This is undesirable, because it causes wear of the radial sectors of the mold, sealing problems during a molding process and, more generally, quality problems of the finished product.

Further advantages and features of the molding assembly according to the present invention will become clear to those skilled in the art from the following detailed and non-limiting description of an embodiment thereof with reference to the accompanying drawings in which:

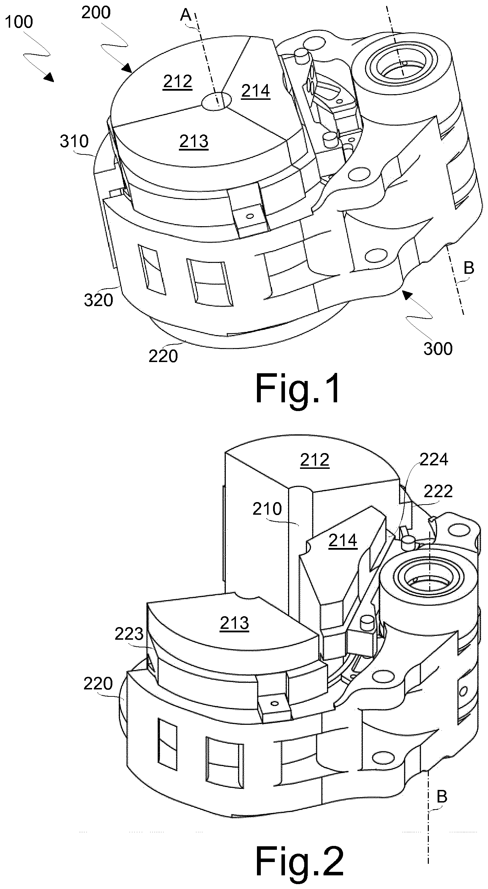

- Figure 1 is a perspective view showing a molding assembly according to the invention in a closed configuration;
- Figure 2 is a perspective view showing the molding assembly of figure 1 in an open configuration;

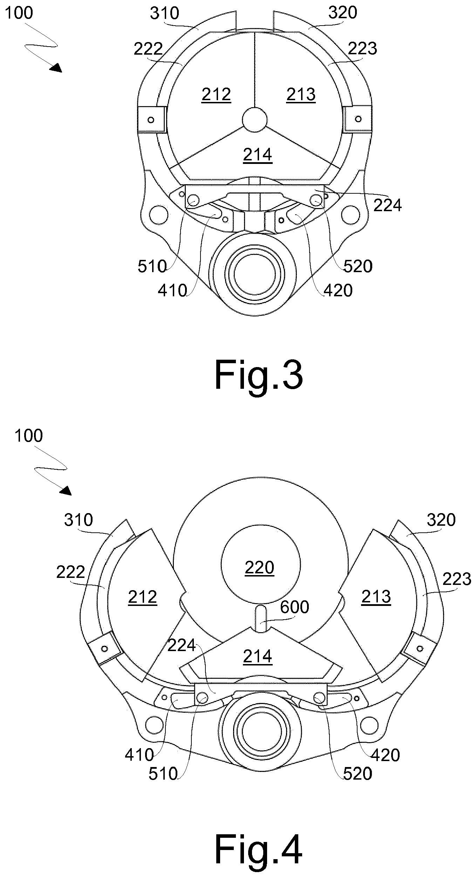

- Figure 3 is a top plan view of the molding assembly in a closed configuration;
- Figure 4 is a top plan view of the molding assembly in an open configuration;

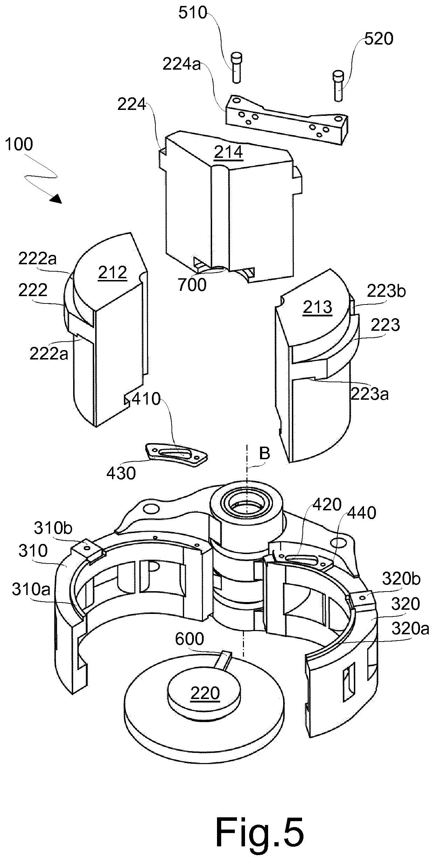

- Figure 5 is an exploded perspective view of the molding assembly according to the invention.

Referring to the drawings, the molding assembly according to the invention is generally indicated by reference numeral 100 and comprises a mold 200 for molding hollow containers such as glass bottles and a mold-holder 300 configured to support it and allow it to be used on a molding machine.

Reference will be made in the following to the manufacturing of glass bottles only, being it understood that the molding assembly according to the invention is not limited to this type of hollow containers nor to any material, and that the molding assembly could be also used in the manufacturing of hollow containers made of different materials and having different shapes, provided that they are made by blow forming with air or gas under pressure.

The mold 200 comprises a body 210 having a generally cylindrical shape provided with a flange radially protruding from its shell and configured so as to allow mounting of the body on the mold-holder 300, as will be described in greater detail below.

The body 210 includes an axis A, which is a substantially vertical axis in an operating condition thereof, and an internal cavity 211 suitable for receiving a preform of a container to be manufactured along that axis. The internal cavity 211 has an opening formed on the top of the cylindrical body 210 so as to allow insertion of the preform and insufflation of air or gas under pressure. The cavity is closed at the bottom by a bottom plate 220 of the mold 200.

For ease of representation, this cavity has a cylindrical shape in the drawings, but it will be appreciated that it could have any other shape as well, such as the typical shape of a bottle comprising an upper neck portion and a lower container portion having a larger diameter.

In order to allow extraction of a bottle from the mold 200, the latter is made up of a plurality of separable sectors, in particular three separable radial sectors 212, 213, 214. Each radial sector 212, 213, 214 comprises a portion 222, 223, 224 of the flange of the cylindrical body 210.

Each radial sector 212, 213, 214 preferably angularly extends over an arc of 120° along the circumferential direction.

The mold-holder 300 comprises a first and a second arms 310, 320 pivotally restrained to each other about an axis B, which is a substantially vertical axis in an operating condition similarly to the axis A of the cylindrical body 210. As shown in the drawings, through openings may be formed in the arms 310, 320 so as to reduce the overall weight of the mold-holder.

A first and a second radial sectors 212, 213 of the body 210 of the mold 200 are respectively restrained to the first and second arms 310, 320 of the mold-holder 300 at their respective flange portions 222, 223 and are rotatable therewith about the axis B.

In the illustrated embodiment, the restraining means between the first and the second arms 310, 320 and the flange portions 222, 223 of the first and second radial sectors 212, 213 comprise, for example ribs 310a, 320a formed in low relief on the top of the arms and slots 222a, 223a having a matching shape formed on the lower surface of the flange portions 222, 223 of the radial sectors 212, 213. The fastening means also comprise dowels 310b, 320b protruding from the top of the arms 310, 320 and recesses 222b, 223b of matching shape formed in the radial direction on the flange portions 222, 223 of the first and second radial sectors 212, 213.

A third radial sector 214 of the body 210 of the mold 200 is instead restrained to both the first and the second arms 310, 320 of the mold-holder 300 through a kinematic chain configured so as to cause it to make a translation movement from and towards the axis B of the mold-holder simultaneously with the rotation of the first and the second arms 310, 320. In a closed configuration of the mold 200, the third radial sector 214 contacts the first and the second sectors 212, 213 and is arranged between them and the rotation axis B of the mold-holder 300.

According to a preferred embodiment of the invention, the kinematic chain is a cam-follower mechanism and comprises a pair of guiding slots 410, 420 respectively associated to the arms 310, 320 of the mold-holder 300 and a pair of pins 510, 520 respectively associated with the portion of flange 224 of the third radial sector 214, wherein each pin 510, 520 engages one of the guiding slots 410, 420.

Thanks to this configuration, the rotation of the arms 310, 320 of the mold-holder 300 cause at the same time a relative displacement between the pins 510, 520 and the guiding slots 410, 420 which results in a translation movement of the third sector 214 from and towards the axis B of the mold-holder 300.

In the illustrated embodiment, the guiding slots 410, 420 are close to the axis B of the mold-holder 300. The pins 510, 520 are preferably fitted in a removable manner in suitable holes formed in the flange portion 224 of the third radial sector 214, so that they may be replaced if worn out or broken.

It will be understood that, in an entirely equivalent way, the slots 410, 420 may be formed on the flange portion 224 of the third radial sector 214 and the pins 510, 520 may be associated to the arms 310, 320 of the mold-holder 300.

In the aim to minimize wear out problems caused by the sliding of the pins 510, 520 along the slots 410, 420, the latter are preferably formed as metal plates 430, 440 e.g. made of chrome steel and, more generally, of materials featuring a hardness greater than the hardness of the material forming the mold-holder, which is typically construction steel of the type Fe360 or the like.

The metal plates 430, 440 are preferably mounted in a removable manner, for example by way of screws, on the arms 310, 320 of the mold-holder or on the flange portion 224 of the third radial sector 214 of the mold 200. This technical solution offers the additional advantage of allowing replacement of the guides 410, 420 when they are worn, damaged, or broken.

It is also understood that kinematic chains equivalent to the cam-follower kinematic chain described above might be employed e.g. a set of articulated arms. The cam-follower solution is however preferred, because it is generally more compact and easier to implement and assemble.

The molding assembly according to the invention may also advantageously comprise a further kinematic chain configured to facilitate and guide the translation movements of the third radial sector 214 of the mold 200 from and towards the axis B of the mold-holder 300.

The further kinematic chain comprises in particular a radial rib 600 formed in low relief on one between the base of the third radial sector 214 and the bottom plate 220 of the mold 200 that cooperates with a slot 700 having a matching shape formed on the other one between the base of the third radial sector 214 and the bottom plate 220 of the mold 200.

The function of these guiding means, 600, 700, is to ensure that displacements of the third radial sector 214 are exclusively translation movements along a radial direction. This condition in fact may only be achieved when rotation of the first and second radial sectors 212, 213 is synchronous, which in practice almost never occurs due to friction, as well as due to the manufacturing tolerances of the components of the mold and of the mold-holder and the like.

Asynchronous rotations of the arms 310, 320 of the mold-holder 300 cause both a translation and a rotation movement of the third radial sector 214, so that when the mold 200 is closed the third radial sector 214 has to be rotated into the correct position by contact with the first and the second radial sectors 212, 213. This is undesirable, because it results in uneven wear of the radial sectors of the mold, sealing problems during the molding process and, more generally, quality problems of the finished products.

According to a further aspect of the invention, the third radial sector 214 preferably comprises a flattened portion formed on its cylindrical shell and facing the axis B of the mold-holder 300. In this case, the flange portion 224 of the third radial sector 214 is formed also on the flattened portion. This configuration of the third radial sector 214 is advantageous in that it allows to reduce the overall size of the molding assembly 100 while ensuring adequate space for the assembly of the components that form the kinematic chain allowing the arms 310, 320 of the mold-holder 300 to move the third radial sector 214. According to a preferred embodiment of the invention, the part of the flange portion 224 of the third radial sector 214 associated to its flattened portion is a removable element 224a fixed on the latter e.g. by way of screws. The holes intended to receive the pins 510, 520 are formed in the removable element 224a of the flange portion 224.

The invention has been disclosed with reference to preferred embodiments. Those skilled in the art will understand that there may be further embodiments relating to the same inventive idea, as defined by the scope of protection of the claims set forth below.

## Claims

1. A molding assembly (100) for the manufacturing of hollow containers, said molding assembly comprising a mold (200) and a mold-holder (300), wherein:
- said mold (200) comprises a body (210) having a generally cylindrical shape provided with a flange radially protruding from a shell thereof, said body (210) being made up of three separable radial sectors (212, 213, 214) and comprising an internal cavity (211) suitable to receive a preform of a container to be manufactured;
- said mold-holder (300) comprises a first and a second arms (310, 320) pivotally restrained to each other about a common axis (B),
and wherein a first and a second radial sectors (212, 213) of the mold (200) are respectively removably mounted on the first and second arms (310, 320) of the mold-holder (300) and are rotatable therewith about said axis (B),
**characterized in that** a third radial sector (214) of the mold (200) is restrained to both the first arm and the second arm (310, 320) of the mold-holder (300) through a kinematic chain (410, 420, 510, 520) configured so as to cause the third radial sector (214) to make translation movements from and towards the axis (B) of the mold-holder simultaneously with the rotation of the first and second arms (310, 320)
wherein said kinematic chain comprises a pair of guiding slots (410, 420) respectively associated to the arms (310, 320) of the mold-holder (300) and a pair of pins (510, 520) associated to a flange portion (224) of the third radial sector (214), or, alternatively, a pair of guiding slots (410, 420) respectively associated to the flange portion of the third radial sector (214) and a pair of pins respectively associated with the arms (310, 320) of the mold-holder (300), each pin (510, 520) engaging one of said guiding slots (410, 420).

2. A molding assembly (100) according to claim 1, wherein said guiding slots (410, 420) are formed in respective plates (430, 440).

3. A molding assembly (100) according to claim 2, wherein said plates are mounted in a removable manner on the arms (310, 320) of the mold-holder or on the flange portion (224) of the third radial sector (214).

4. A molding assembly (100) according to any one of claims 1 to 3, wherein the pins (510, 520) are mounted in a removable manner on the flange portion of the third radial sector (214) or on the arms (310, 320) of the mold-holder (300).

5. A molding assembly (100) according to any one of claims 1 to 4, further comprising guiding means of the third radial sector (214), said guiding means comprising a radial rib (600) formed in low relief on one between the base of the third radial sector (214) and a bottom plate (220) of the mold (200) and a slot having a matching shape formed on the other one between the base of the third radial sector (214) and the bottom plate (220) of the mold (200).

6. A molding assembly (100) according to any one of claims 1 to 5, wherein the third radial sector (214) of the mold (200) has a flattened portion formed on the cylindrical shell, said flattened portion facing the axis (B) of the mold-holder (300), and wherein the flange portion (224) of the third radial sector (214) is formed on said flattened portion.

## Patentansprüche

1. Eine Formeinrichtung (100) für die Herstellung von hohlen Behältnissen, wobei die besagte Formeinrichtung eine Form (200) und eine Form-Halterung (300) umfasst, wobei:
- die besagte Form (200) einen Körper (210) aufweist mit einer im Allgemeinen zylindrischen Gestalt, versehen mit einem von einer Schale desselben radial hervorstehenden Flansch, wobei der besagte Körper (210) aus drei voneinander separierbaren Radialsektoren (212, 213, 214) besteht und einen inneren Hohlraum aufweist, der dazu geeignet ist, einen Vorformling eines herzustellenden Behältnisses aufzunehmen;
- die besagte Form-Halterung (300) einen ersten und einen zweiten Arm (310, 320) aufweist, welche um eine gemeinsame Achse (B) schwenkbar aneinander gehalten sind;
- und wobei ein erster und ein zweiter Radialsektor (212, 213) der Form (200) an dem ersten bzw. zweiten Arm (310, 320) der Form-Halterung (300) lösbar festgelegt ist und zusammen mit jenem um die besagte Achse (B) schwenkbar ist;
- **dadurch gekennzeichnet, dass** ein dritter Radialsektor (214) der Form (200) sowohl an dem ersten Arm als auch an dem zweiten Arm (310, 320) der Form-Halterung (300) gehalten ist mittels einer kinematischen Kette (410, 420, 510, 520), welche derart konfiguriert ist, um den dritten Radialsektor (214) gleichzeitig zu der Rotation des ersten und zweiten Arms (310, 320) zu Translationsbewegungen von und zu der Achse (B) der Form-Halterung zu veranlassen,
- wobei die besagte kinematische Kette ein Paar von Führungsschlitzen (410, 420) umfasst, welche jeweils einem Arm (310, 320) der Form-Halterung (300) zugeordnet sind, sowie ein Paar von Stiften (510, 520), welche einem Flanschbereich (224) des dritten Radialsektors (214) zugeordnet sind, oder, alternativ dazu, ein Paar von Führungsschlitzen (410, 420), welche jeweils dem Flanschbereich (224) des dritten Radialsektors (214) zugeordnet sind, sowie ein Paar von Stiften (510, 520), welche jeweils einem Arm (310, 320) der Form-Halterung (300) zugeordnet sind, wobei jeder Stift (510, 520) in einen der besagten Schlitze (410, 420) eingreift.

2. Eine Formeinrichtung (100) gemäß Anspruch 1, wobei die besagten Führungsschlitze (410, 420) in jeweiligen Platten (430, 440) ausgebildet sind.

3. Eine Formeinrichtung (100) gemäß Anspruch 2, wobei die besagten Platten auf lösbare Weise an den Armen (310, 320) der Form-Halterung oder an dem Flanschbereich (224) des dritten Radialsektors (214) montiert sind.

4. Eine Formeinrichtung (100) gemäß einem der Ansprüche 1 bis 3, wobei die Stifte (510, 520) auf lösbare Weise an dem Flanschbereich des dritten Radialsektors (214) oder an den Armen (310, 32) der Form-Halterung (300) montiert sind.

5. Eine Formeinrichtung (100) gemäß einem der Ansprüche 1 bis 4, ferner umfassend ein Führungsmittel des dritten Radialsektors (214), wobei das besagte Führungsmittel eine Radialrippe (600) umfasst, die als flaches Relief an einem Teil ausgebildet ist, das ausgewählt ist zwischen der Basis des dritten Radialsektors (214) und einer Bodenplatte (220) der Form (200), sowie einen Schlitz mit einer passenden Gestalt an dem jeweils anderen Teil von der Basis des dritten Radialsektors (214) und der Bodenplatte (220) der Form (200).

6. Eine Formeinrichtung (100) gemäß einem der Ansprüche 1 bis 5, wobei der dritte Radialsektor (214) der Form (200) einen an der zylindrischen Schale ausgebildeten, abgeflachten Bereich aufweist, wobei der besagte abgeflachte Bereich der Achse (B) der Form-Halterung (300) zugewandt ist, und wobei der Flanschbereich (224) des dritten Radialsektors (214) an dem besagten, abgeflachten Bereich ausgebildet ist.

## Revendications

1. Ensemble de moulage (100) pour la fabrication de contenants creux, ledit ensemble de moulage comprenant un moule (200) et un support de moule (300), dans lequel :
ledit moule (200) comprend un corps (210) ayant une forme généralement cylindrique prévue avec une bride radialement en saillie à partir de sa coque, ledit corps (210) étant composé de trois secteurs radiaux séparables (212, 213, 214) et comprenant une cavité interne (211) appropriée pour recevoir une préforme d'un contenant à fabriquer ;
ledit support de moule (300) comprend un premier et un second bras (310, 320) retenus de manière pivotante entre eux autour d'un axe commun (B),
et dans lequel un premier et un deuxième secteur radial (212, 213) du moule (200) sont respectivement montés de manière amovible sur les premier et second bras (310, 320) du support de moule (300) et peuvent tourner avec ce dernier autour dudit axe (B),
**caractérisé en ce qu'**un troisième secteur radial (214) du moule (200) est retenu à la fois sur le premier bras et le second bras (310, 320) du support de moule (300) par le biais d'une chaîne cinématique (410, 420, 510, 520) configurée pour amener le troisième secteur radial (214) à réaliser des mouvements de translation à partir de et vers l'axe (B) du support de moule simultanément avec la rotation des premier et second bras (310, 320),
dans lequel ladite chaîne cinématique comprend une paire de fentes de guidage (410, 420) respectivement associées aux bras (310, 320) du support de moule (300) et une paire de broches (510, 520) associées à une partie de bride (224) du troisième secteur radial (214) ou bien, en variante, une paire de fentes de guidage (410, 420) respectivement associées à la partie de bride du troisième secteur radial (214) et une paire de broches respectivement associées avec les bras (310, 320) du support de moule (300), chaque broche (510, 520) mettant en prise l'une desdites fentes de guidage (410, 420).

2. Ensemble de moulage (100) selon la revendication 1, dans lequel lesdites fentes de guidage (410, 420) sont formées dans des plaques (430, 440) respectives.

3. Ensemble de moulage (100) selon la revendication 2, dans lequel lesdites plaques sont montées d'une manière amovible sur les bras (310, 320) du support de moule ou sur la partie de bride (224) du troisième secteur radial (214).

4. Ensemble de moulage (100) selon l'une quelconque des revendications 1 à 3, dans lequel les broches (510, 520) sont montées d'une manière amovible sur la partie de bride du troisième secteur radial (214) ou sur les bras (310, 320) du support de moule (300).

5. Ensemble de moulage (100) selon l'une quelconque des revendications 1 à 4, comprenant en outre des moyens de guidage du troisième secteur radial (214), lesdits moyens de guidage comprenant une nervure radiale (600) formée en faible relief d'une part entre la base du troisième secteur radial (214) et la plaque inférieure (220) du moule (200) et une fente ayant une forme correspondante formée d'autre part entre la base du troisième secteur radial (214) et la plaque inférieure (220) du moule (200).

6. Ensemble de moulage (100) selon l'une quelconque des revendications 1 à 5, dans lequel le troisième secteur radial (214) du moule (200) a une partie aplatie formée sur la coque cylindrique, ladite partie aplatie faisant face à l'axe (B) du support de moule (300), et dans lequel la partie de bride (224) du troisième secteur radial (214) est formée sur ladite partie aplatie.
